# EUROPÄISCHE PATENTSCHRIFT

(11) **EP 4 330 453 B1**
(45) Veröffentlichungstag und Bekanntmachung des Hinweises auf die Patenterteilung: **23.07.2025**
(21) Anmeldenummer: 22725750.8
(22) Anmeldetag: 26.04.2022
(51) Int. Cl.: D01H 1/38, B65H 65/00

(54) **FADENKLEMMVORRICHTUNG**
THREAD CLAMPING DEVICE
DISPOSITIF DE SERRAGE DE FIL

(30) Priorität: 28.04.2021 DE 102021110888
(43) Veröffentlichungstag der Anmeldung: 06.03.2024
(73) Patentinhaber: Saurer Spinning Solutions GmbH & Co. KG, 52531 Übach-Palenberg (DE)
(72) Erfinder: JAKOB, Michael, 93051 Regensburg (DE); WINTER, Josef, 73650 Winterbach (DE)
(74) Vertreter: Morgenthum-Neurode, Mirko
(86) Internationale Anmeldenummer: PCT/EP2022/060994
(87) Internationale Veröffentlichungsnummer: WO 2022/229147

(56) Entgegenhaltungen:
- EP-A1- 3 686 329
- DE-A1- 102011 076 744
- DE-A1- 102013 020 470
- DE-A1- 102017 103 754

## Beschreibung

Die Erfindung betrifft eine Fadenklemmvorrichtung für eine Spindel einer Spinn- oder Zwirnmaschine zur lösbaren Festlegung eines Fadens in einem Klemmspalt, mit
- einer ersten Klemmeinheit mit einer koaxial zur Spindel anordbaren Innenhülse und einem in axialer Richtung an der Innenhülse festlegbaren Fadentrenner, wobei die erste Klemmeinheit an einem Oberteil der Spindel axial positionierend festlegbar ist, und
- einer zweiten Klemmeinheit mit einem Klemmelement, das axial gegenüber der ersten Klemmeinheit zwischen einer den Klemmspalt zwischen dem Fadentrenner und dem Klemmelement schließenden Klemmstellung und einer den Klemmspalt freigebenden Öffnungsstellung verstellbar ist.

Fadenklemmvorrichtungen der eingangs genannten Art sind in vielfältigen Ausgestaltungen aus dem Stand der Technik, bspw. der DE 10 2011 076 744 A1, bekannt. Mittels solcher Fadenklemmvorrichtungen lässt sich der sogenannte Umwindefaden beim Austausch einer vollen Fadenspule an einer Spinn- oder Zwirnmaschine fixieren.

Hierfür weisen die Fadenklemmvorrichtungen in der Regel eine erste und eine zweite auf einem rotierbaren Oberteil einer Spinn- oder Zwirnspindel angebrachte erste und zweite Klemmeinheit auf. Die erste Klemmeinheit weist bspw. eine verdrehfest auf dem rotierbaren Oberteil der Spinn- oder Zwirnspindel angebrachte Innenhülse sowie einen stirnseitig einenends an der Innenhülse anliegenden Fadentrenner auf, wobei die Innenhülse anderenends zur axialen Positionssicherung an dem Oberteil der Spinn- oder Zwirnspindel festgelegt ist. Das zweite Klemmelement, bspw. eine koaxial zur Innenhülse angeordnete Außenhülse, ist hingegen gegenüber dem rotierbaren Oberteil der Spinn- oder Zwirnspindel sowie der ersten Klemmeinheit in axialer Richtung beweglich gelagert und wird, bspw. über eine Feder, bis zu einer bestimmten Drehzahl der Spinn- oder Zwirnspindel in einer den Klemmspalt zwischen dem Fadentrenner und dem zweiten Klemmelement schließenden Klemmstellung gehalten.

Das zweite Klemmelement ist dabei so ausgebildet, dass es in der Klemmstellung ohne eine durch eine Rotation des Oberteils der Spinn- oder Zwirnspindel hervorgerufene Fliehkraftbeaufschlagung den Faden in dem Klemmspalt fixiert. Unter dem Einfluss von Fliehkräften hingegen erfolgt eine axiale Verlagerung des zweiten Klemmelements in Richtung der Öffnungsstellung, in der ein im Klemmspalt fixierter Faden freigegeben wird.

Bei bekannten Fadenklemmvorrichtungen ist der Verbindungsbereich des Oberteils der Spinn- oder Zwirnspindel zur verdrehfesten Verbindung mit der Innenhülse der ersten Klemmeinheit abschnittsweise rändelförmig ausgebildet. Bei der Montage schneidet sich der rändelförmige Abschnitt in die Innenhülse ein, wodurch ein in Umfangsrichtung wirkender Formschluss zwischen der Innenhülse und dem Oberteil der Spinn- oder Zwirnspindel erzeugt wird. Die abschnittsweise rändelförmige Ausgestaltung des Oberteils der Spinn- oder Zwirnspindel stellt jedoch hohe Anforderungen an die Fertigung der Spinn- oder Zwirnspindel. Sind die Kanten des rändelförmigen Abschnitts bspw. nicht ausreichend scharf genug ausgebildet, dann schneiden diese bei der Montage der Innenhülse an dem Oberteil der Spinn- oder Zwirnspindel nicht in vorgegebener Weise in den Kunststoff der Innenhülse ein. Dies hat zur Folge, dass stattdessen ein Materialverdrängungsprozess stattfindet, bei dem die Innenhülse radial nach außen gedrückt wird, sodass sich der Außendurchmesser der Innenhülse abschnittsweise vergrößert. Hierdurch kann es zu einer unerwünschten Reibung zwischen der Innenhülse und dem axial gegenüber der Innenhülse verlagerbaren Klemmelement kommen, welche zu einer Blockade und somit zu einem Ausfall der Fadenklemmvorrichtung führen kann.

Alternativ dazu ist aus der DE 10 2011 076 744 A1 vorbekannt, die Innenseite der Innenhülse mit einer verzahnten Ringfläche zum Eingriff in eine korrespondierende Kontur des Spindeloberteils auszubilden. Auch diese Lösung unterliegt hohen Anforderungen an die Fertigung sowohl der Innenhülse als auch des Spindeloberteils. Ist die Verzahnung ungenau ausgestaltet, kann es auf Seite der Innenhülse ebenfalls zu einer Materialverdrängung kommen, welche die Innenhülse radial nach außen drückt.

Das Dokument DE 10 2013 020 470 A1 offenbart eine Fadenklemmvorrichtung mit den oberbegrifflichen Merkmalen des Anspruchs 1.

Hiervon ausgehend liegt der Erfindung die Aufgabe zugrunde, eine Fadenklemmvorrichtung bereitzustellen, welche in einfacher und zuverlässiger Weise eine verdrehsichere Verbindung der Innenhülse mit der Spindel der Spinn- oder Zwirnmaschine ermöglicht.

Die Erfindung löst die Aufgabe durch eine Fadenklemmvorrichtung mit den Merkmalen des Anspruchs 1. Vorteilhafte Weiterbildungen der Erfindung sind in den abhängigen Ansprüchen angegeben.

Die Fadenklemmvorrichtung nach der vorliegenden Erfindung weist eine erste und zweite

Klemmeinheit auf. Die erste Klemmeinheit umfasst eine koaxial zur Spindel anordbare Innenhülse und einen in axialer Richtung an der Innenhülse festlegbaren Fadentrenner, wobei die erste Klemmeinheit an einem Oberteil der Spindel axial positionierend festlegbar ist. Die zweite Klemmeinheit ist mit einem Klemmelement ausgestattet, das axial gegenüber der ersten Klemmeinheit zwischen einer den Klemmspalt zwischen dem Fadentrenner und dem Klemmelement schließenden Klemmstellung und einer den Klemmspalt freigebenden Öffnungsstellung verstellbar ist. Die zweite Klemmeinheit kann eine aus dem Stand der Technik bekannte übliche Ausgestaltung aufweisen. So kann das Klemmelement der zweiten Klemmeinheit beispielsweise als ein- oder mehrteilige Außenhülse ausgestaltet sein, welches von der Innenhülse relativ beweglich zur Innenhülse gelagert ist. Dazu können die Innenhülse und die Außenhülse bzw. das Klemmelement auf ihrer Innen- bzw. Außenseite entsprechende, miteinander in Wirkverbindung verbringende bzw. stehende Lagerungs- und Verschiebemittel aufweisen. Als Lagerungsmittel seien rein beispielhaft miteinander in Eingriff verbringbare Vorsprünge und Ausnehmungen genannt, welche an der Innenhülse und dem Klemmelement entsprechend ausgebildet sind, um eine geführte Relativbewegung des Klemmelementes zu der Innenhülse bewirken zu können. Die Verschiebemittel können dabei vorzugsweise durch eine übliche Fliehkrafteinheit ausgebildet sein, welche mehrere Fliehkraftelemente aufweist, die zwischen der Innenhülse und dem Klemmelement derart gelagert sind, dass das Klemmelement abhängig von einer Drehzahl der Spindel relativ zu der Innenhülse zum entsprechenden Öffnen und Schließen des Klemmspaltes bewegbar ist.

Der Fadentrenner ist zur axial positionierenden Festlegung der Innenhülse an dem Oberteil der Spindel sowie zur verdrehfesten Verbindung der Innenhülse mit dem Spindeloberteil ausgebildet. Der Fadentrenner und die Innenhülse sind zudem verdrehfest miteinander verbindbar. Zur Anordnung der Fadenklemmvorrichtung an einem Spindeloberteil einer Spinn- oder Zwirnmaschine wird die Innenhülse der ersten Klemmeinheit auf das Oberteil der Spindel aufgeschoben. In Aufschubrichtung kann die axiale Position der Innenhülse vorzugsweise durch eine entsprechende Ausgestaltung der Spindel, bspw. durch einen Vorsprung oder Absatz, an welcher die Innenhülse einenends stirnseitig anlegbar ist, festgelegt werden. Zur axialen Positionssicherung der Innenhülse entgegen der Aufschubrichtung auf die Spindel dient erfindungsgemäß der Fadentrenner, welcher auf der Spindel in axialer Richtung festgelegt anderenends mit der Innenhülse in Wirkverbindung befindlich ist.

Gemäß der vorliegenden Erfindung ist vorgesehen, dass der Fadentrenner neben der axialen Positionssicherung der Innenhülse ferner zur verdrehfesten Verbindung der Innenhülse mit der Spindel dient, wobei hierzu der Fadentrenner wenigstens verdrehfest mit der Innenhülse und weiter bevorzugt verdrehfest mit dem Spindeloberteil verbindbar ist. Der Fadentrenner dient demgemäß neben einer axialen Positionierung der Innenhülse an dem Spindeloberteil zumindest entgegen der Aufschubrichtung der Innenhülse ferner dazu, die Innenhülse verdrehfest mit der Spindel zu verbinden, wobei der Fadentrenner in seiner die Innenhülse axial positionierenden Stellung an dem Spindeloberteil die erste Klemmeinheit und zudem die verdrehfeste Verbindung mit dem Spindeloberteil bewirkt. Über die verdrehfeste Verbindbarkeit des Fadentrenners mit der Innenhülse in dieser Position des Fadentrenners wird eine verdrehfeste Verbindung der Innenhülse an dem Spindeloberteil erzielt, sodass auf eine separate Ausgestaltung der Spindel im Verbindungsbereich mit der Innenhülse zur verdrehfesten Verbindung verzichtet werden kann.

Die Fadenklemmvorrichtung ermöglicht somit eine besonders einfache und zuverlässige verdrehfeste Montage der Innenhülse an dem Spindeloberteil, wobei zu Betriebsstörungen führende Deformationen der Innenhülse, bspw. im Zusammenwirken mit Verbindungselementen an dem Spindeloberteil, wirksam vermieden werden. Die Fadenklemmvorrichtung nach der vorliegenden Erfindung ermöglicht eine besonders einfache und kostengünstige Verbindung der Fadenklemmvorrichtung mit der Spindel.

Die verdrehfeste Verbindung des Fadentrenners mit dem Spindeloberteil kann dabei grundsätzlich in beliebiger Weise ausgebildet sein, bspw. über formschlüssige Verbindungen, bei denen über eine bestimmte Formgebung die Verdrehsicherung zwischen dem Spindeloberteil und dem Fadentrenner erreicht wird. Nach einer bevorzugten Ausgestaltung der Erfindung ist vorgesehen, dass der Fadentrenner auf das Spindeloberteil aufpressbar ist.

Gemäß dieser Ausgestaltung der Erfindung ist der Fadentrenner derart ausgebildet, dass er in der Montagelage der Fadenklemmvorrichtung an der Spindel über eine Pressverbindung verdrehfest mit dem Spindeloberteil verbunden ist. Die Pressverbindung ist dabei derart ausgestaltet, dass diese neben einer zuverlässigen Positionierung der Innenhülse in axialer Richtung der Spindel zumindest entgegen der Aufschubrichtung der Innenhülse ferner eine Verdrehsicherung der Innenhülse gegenüber der Spindel gewährleistet. Die Pressverbindung zwischen der Spindel und dem Fadentrenner lässt sich dabei besonders einfach und kostengünstig herstellen.

Zur verdrehfesten Verbindung des Fadentrenners mit der Innenhülse ist neben der formschlüssigen Verbindung nach einer bevorzugten Ausgestaltung der Erfindung vorgesehen, dass der Fadentrenner kraft- und/oder stoffschlüssig verdrehfest mit der Innenhülse verbindbar ist. Eine kraftschlüssige Verbindung kann bspw. durch eine geeignete Ausgestaltung der Oberflächen der miteinander in Kontakt bringbaren Flächen von Fadentrenner und Innenhülse erzeugt werden, wobei die Anpresskraft und die zwischen den Flächen bestehende Reibung eine zuverlässige Verdrehsicherung gewährleistet. Eine stoffschlüssige Verbindung kann beispielsweise mittels Klebens erfolgen.

Zur Herstellung der formschlüssigen Verbindung ist gemäß der Erfindung vorgesehen, dass der Fadentrenner mit einem Kontaktabschnitt an der Innenhülse in Eingriff bringbare, insbesondere in den Kontaktabschnitt einpressbare, Eingriffselemente aufweist. Gemäß dieser Ausgestaltung der Erfindung ist der Fadentrenner im Kontaktbereich mit der Innenhülse derart ausgestaltet, dass sich vor oder bei der Montage der Fadenklemmvorrichtung an der Spindel Eingriffselemente an dem Fadentrenner an definierten Stellen in die Innenhülse einprägen, wodurch eine formschlüssige Verbindung zwischen der Innenhülse und dem Fadentrenner hergestellt wird. Durch diese Ausgestaltung der Erfindung wird in besonders zuverlässiger und einfacher Weise eine im Wesentlichen spielfreie verdrehsichere Anordnung der Innenhülse an der Spindel ermöglicht. Ferner bewirkt die Ausgestaltung des Fadentrenners die axial positionierende Festlegung der ersten Klemmeinheit an dem Spindeloberteil sowohl in als auch entgegen der Aufschubrichtung der Innenhülse. Es kann bei dieser Ausführung durchaus auf die Innenhülse in Aufschubrichtung festlegenden Elemente an dem Spindeloberteil bzw. an der Spindel selbst verzichtet werden.

Besonders bevorzugt sind die Eingriffselemente in den aus einem durch Krafteinwirkung verformbaren Material ausgebildeten Kontaktabschnitt der Innenhülse zum Klemmen der Innenhülse an dem Spindeloberteil einpressbar. Beispielsweise können ausgewählte oder sämtliche Eingriffselemente an dem Fadentrenner in ihrer Dimension derart ausgebildet sein, dass sich die Eingriffselemente bei der Montage der Fadenklemmvorrichtung an der Spindel in den aus beispielsweise einem kunststoffhaltigen Material ausgebildeten Kontaktabschnitt der Innenhülse derart einprägen, dass eine Materialverdrängung in Richtung der Innenhülsenmitte erfolgt, welche eine Reduzierung des Innendurchmessers der Innenhülse an den entsprechenden Materialverdrängungsstellen zur Folge hat, wodurch eine die Innenhülse an das Spindeloberteil klemmende Klemmkraft bewirkt wird. Vorzugsweise kann der Fadentrenner im Allgemeinen aus einem metallhaltigen Material ausgestaltet sein, womit sich insbesondere die Eingriffselemente im Besonderen bei dieser bevorzugten Ausführungsform zuverlässiger und leichter in den Kontaktabschnitt der Innenhülse einprägen lassen. Besonders bevorzugt ist der aus metallhaltigem Material ausgebildete Fadentrenner in Abkehr zu üblichen Drehverfahren mittels eines Sinterverfahrens hergestellt. Dadurch lassen sich insbesondere polygonal ausgebildete Eingriffselemente äußerst präzise an dem Fadentrenner ausbilden. Die erste Klemmeinheit kann dadurch in einfacher und zuverlässiger Weise an dem Spindeloberteil sowohl in Umfangsrichtung als auch in axialer Richtung festgelegt werden, ohne dass es irgendwelcher weiterer Festlegungselemente an der Innenhülse und/oder dem Spindeloberteil bedarf. Der Innendurchmesser der Innenhülse ist dabei bevorzugt derart in Abhängigkeit des Außendurchmessers des Spindeloberteils ausgewählt, dass der Innendurchmesser der Innenhülse einen Aufschub der Innenhülse auf das Spindeloberteil sowie die Klemmwirkung durch das Einpressen der Eingriffselemente ermöglicht.

Nach einer weiteren bevorzugten Ausgestaltung der Erfindung ist vorgesehen, dass der Kontaktabschnitt an der Innenhülse mit den Eingriffselementen in Wirkverbindung bringbare Kopplungselemente aufweist. Gemäß dieser Ausgestaltung der Erfindung sind im Kontaktabschnitt der Innenhülse an die Form der Eingriffselemente an dem Fadentrenner angepasste Kopplungselemente angeordnet, welche im montierten Zustand der Fadenklemmvorrichtung an der Spindel mit den entsprechenden Eingriffselementen in Umfangsrichtung formschlüssig zusammenwirken, sodass eine zuverlässige verdrehsichere Verbindung gewährleistet ist. Die Eingriffselemente und die Kopplungselemente können dabei besonders bevorzugt als Verzahnung ausgebildet sein, welche sowohl in axialer als auch in Umfangsrichtung eine besonders zuverlässige verdrehsichere sowie axiale Positionierung der Innenhülse über den Fadentrenner ermöglichen.

Nach einer weiteren Ausgestaltung der Erfindung ist im Bereich zwischen dem Kontaktabschnitt und dem Fadentrenner ein Verbindungselement angeordnet, das zur kraft- und/oder formschlüssigen verdrehfesten Verbindung mit dem Kontaktabschnitt und dem Fadentrenner ausgebildet ist. Gemäß dieser Ausgestaltung der Erfindung dient das Verbindungselement als Adapterelement, welches in axialer Richtung sowohl mit dem Fadentrenner als auch dem Kontaktabschnitt der Innenhülse verdrehfest verbindbar ist. Die Verwendung eines Verbindungselements ermöglicht es somit, den Fadentrenner und die Innenhülse unabhängig von ihrer Ausgestaltung im Verbindungsbereich verdrehfest miteinander zu verbinden. Das Verbindungselement dient dabei als Adapter, welches wenigstens den Fadentrenner und die Innenhülse in Umfangsrichtung kraft- und/oder formschlüssig miteinander verbindet, sodass auf eine aufeinander abgestimmte Anpassung des Fadentrenners und des Kontaktabschnitts verzichtet werden kann.

Das Verbindungselement kann weiter bevorzugt derart ausgebildet sein, die erste Klemmeinheit an dem Spindeloberteil axial und verdrehsicher mittels Klemmung bzw. Presspassung festzulegen. Dabei kann das Verbindungselement vorzugsweise mit einem Presssitz auf dem Spindeloberteil anordbar sein und/oder wie vorstehend beschriebene Eingriffselemente zum Erzeugen einer Klemmwirkung mit dem Spindeloberteil mittels Materialverdrängung auf Seiten des Fadentrenners und/oder auf Seiten des Kontaktabschnitts bei der Montage der Fadenklemmvorrichtung aufweisen. Alternativ dazu kann die Wirkverbindung zwischen Fadentrenner und Verbindungselement und/oder zwischen Kontaktabschnitt der Innenhülse und Verbindungselement dergestalt sein, dass die wie vorstehend beschriebene Materialverdrängung auf Seiten des Verbindungselements zur Klemmung der ersten Klemmeinheit an dem Spindeloberteil durch Vorsehen von entsprechenden Eingriffselementen an dem Fadentrenner und/oder dem Kontaktabschnitt bewirkbar ist. Das die Materialverdrängung aufweisende Bauteil bzw. ein entsprechender Bauteilabschnitt ist aus einem durch Krafteinwirkung verformbaren Material, wie beispielsweise einem kunststoffhaltigen Material, ausgebildet. Der Innendurchmesser ist dabei, wie vorstehend beschrieben, in Abhängigkeit des Außendurchmessers des Spindeloberteils auszubilden, damit die Klemmwirkung bzw. die Presspassung bzw. der Presssitz mittels der Materialverdrängung erzeugt werden kann.

Gemäß einer bevorzugten Ausgestaltung der Erfindung ist vorgesehen, dass das Verbindungselement als Haftring oder Zahnring ausgebildet ist, welches in besonders zuverlässiger Weise eine kraft- und/oder formschlüssige verdrehfeste Verbindung gewährleisten kann, wobei der Haftring hierbei ein ausreichendes Reibmoment bereitstellt und der Zahnring eine zuverlässige formschlüssige Verbindung sicherstellt.

Weiterhin bevorzugt kann der Fadentrenner in Abkehr zu Vorbekanntem mittels eines Sinterverfahrens aus einem metallhaltigen Material hergestellt sein, wodurch insbesondere die polygone Form präziser ausgebildet werden kann.

Ausführungsbeispiele der Erfindung werden nachstehend mit Bezug auf die Zeichnungen erläutert. In den Zeichnungen zeigen:
- Fig. 1: eine schematische Darstellung einer Explosionsansicht einer Fadenklemmvorrichtung nach einer Ausführungsform;
- Fig. 2: eine perspektivische schematische Ansicht eines weiteren Ausführungsbeispiels einer Innenhülse einer Fadenklemmvorrichtung;
- Fig. 3: eine perspektivische schematische Ansicht eines Fadentrenners der Fadenklemmvorrichtung von Fig. 1;
- Fig. 4: eine perspektivische schematische Darstellung eines weiteren Ausführungsbeispiels eines Fadentrenners und
- Fig. 5: eine perspektivische schematische Ansicht eines weiteren Ausführungsbeispiels eines Fadentrenners.

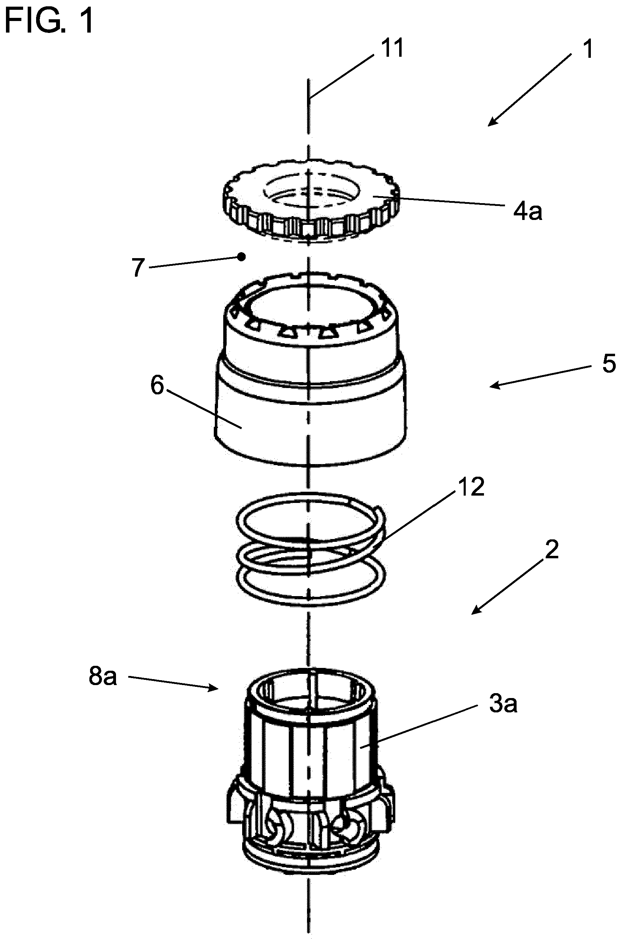

Die in Figur 1 dargestellte Fadenklemmvorrichtung 1 zum Klemmen eines Fadens an einem Oberteil einer Spindel (hier nicht dargestellt), insbesondere an einer hier ebenfalls nicht dargestellten Spinn- oder Zwirnmaschine, umfasst eine gegenüber dem Oberteil der Spindel verdrehfest anordbare Innenhülse 3a einer ersten Klemmeinheit 2, welche neben der Innenhülse 3a ferner einen auf das Oberteil der Spindel aufpressbaren Fadentrenner 4a aufweist, welcher die Fadenklemmvorrichtung 1 entgegen ihrer Aufschubrichtung auf das Oberteil der Spindel in axialer Richtung fixiert.

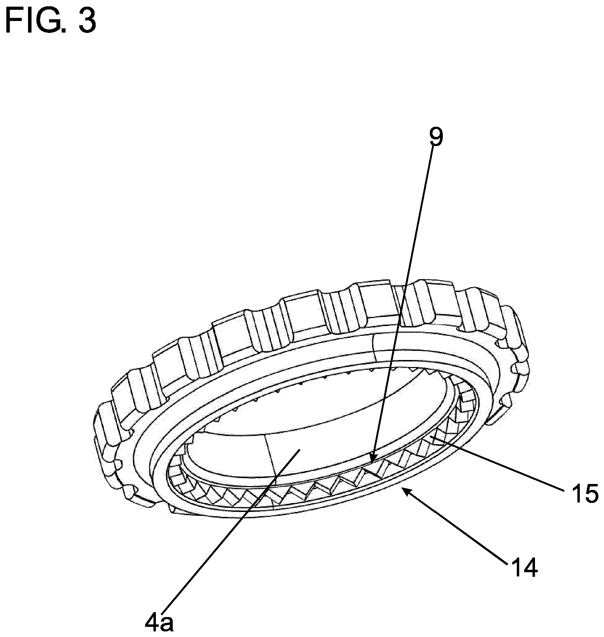

Zur verdrehsicheren Verbindung der Innenhülse 3a mit dem Spindeloberteil ist der verdrehfest auf das Spindeloberteil aufpressbare Fadentrenner 4a im Kontaktbereich mit der Innenhülse 3a mit koaxial umlaufend angeordneten Eingriffselementen 9 in Form von Zähnen 15 versehen (vgl. Figur 3).

Im montierten Zustand der Fadenklemmvorrichtung 1 an dem Spindeloberteil pressen sich die Zähne 15 stirnseitig in den Kontaktabschnitt 8a an der Innenhülse 3a ein und bewirken eine solche Materialverdrängung des Kontaktabschnitts 8a in Richtung Innenhülsenmitte, dass die Innenhülse an dem Spindeloberteil axial und verdrehsicher geklemmt wird und so eine verdrehsichere Anordnung der Innenhülse 3a auf dem Spindeloberteil gewährleistet. Alternativ oder zusätzlich kann der Fadentrenner 4a nach einem weiteren Ausführungsbeispiel über einen Presssitz an dem Spindeloberteil verdrehsicher und axial festgelegt angeordnet sein.

Koaxial zur Innenhülse 3a ist ein in axialer Richtung gegenüber der Innenhülse 3a verschiebbares Klemmelement 6 angeordnet, welches eine auf die Innenhülse 3a aufschiebbare Außenhülse ausbildet und in bekannter Weise entlang der Längsachse 11 relativ zur Innenhülse 3a und dem Fadentrenner 4a verschoben werden kann. Die einander zugewandten Flächen des Fadentrenners 4a und des Klemmelements 6 bilden einen Klemmspalt 7 der Fadenklemmvorrichtung 1 aus, in welchem der Faden an der Spindel geklemmt werden kann. Das axial verschiebbare Klemmelement 6 ist nach diesem Ausführungsbeispiel mittels einer Schraubendruckfeder 12 an der Innenhülse 3a derart axial vorgespannt gelagert, dass es in der Ruhestellung der Spindel in der Klemmstellung angeordnet ist, in der das Klemmelement 6 in Kontakt mit dem Fadentrenner 4a befindlich ist. Zur automatisierten Verschiebung des Klemmelements 6 in Richtung auf die den Faden freigebende Öffnungsstellung, umfasst die Fadenklemmvorrichtung 1 in bekannter Weise eine hier nicht dargestellte Fliehkrafteinheit, deren Fliehkraftmechanismus eine Vielzahl an Fliehkraftelementen umfasst, die das axial verschiebbare Klemmelement 6 von dem Fadentrenner 4a beabstanden, sobald die Spindel mit einer bestimmten Mindestdrehzahl rotiert, wodurch der Klemmspalt 7 geöffnet und ein im Klemmspalt 7 angeordneter Faden freigegeben wird.

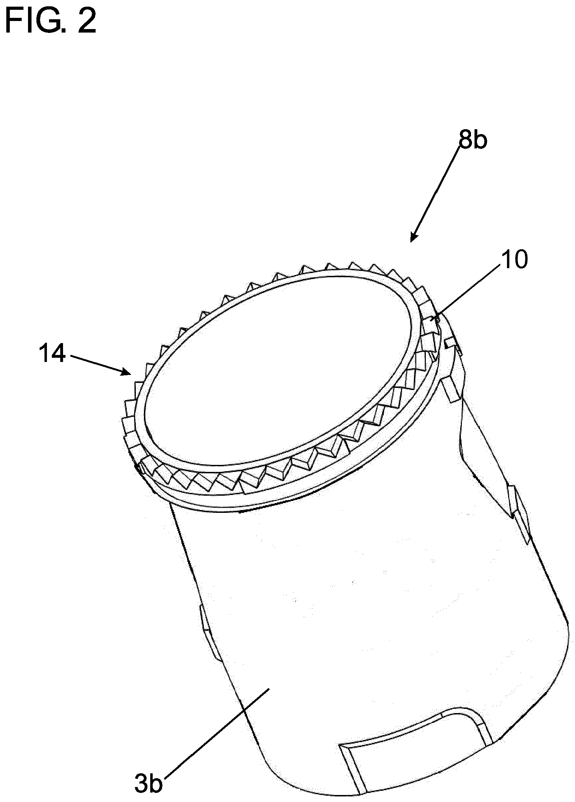

In Figur 2 ist schematisch vereinfacht ein weiteres Ausführungsbeispiel einer Innenhülse 3b dargestellt, welche zur verdrehfesten Verbindung mit dem in Figur 3 dargestellten Fadentrenner 4a im Kontaktabschnitt 8b eine koaxial umlaufende Verzahnung 14 aus einer Vielzahl von Kopplungselementen 10 aufweist. Die Ausgestaltung der Verzahnung 14 an der Innenhülse 3b ist an die Ausgestaltung der Verzahnung 14 des in Figur 3 dargestellten Fadentrenners 4a angepasst, sodass eine zuverlässige verdrehsichere Verbindung zwischen dem Fadentrenner 4a und der Innenhülse 3b in der Montagelage der Fadenklemmvorrichtung 1 an dem Spindeloberteil gewährleistet ist.

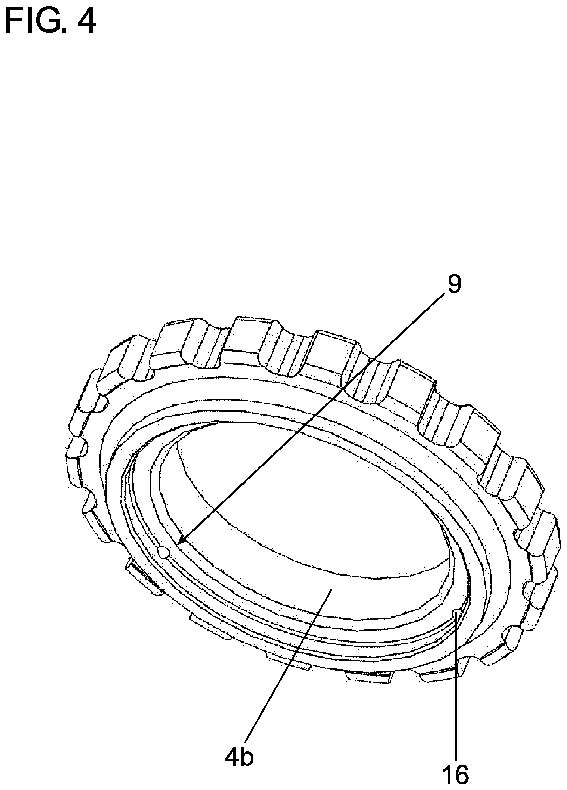

Figur 4 zeigt ein weiteres Ausführungsbeispiel eines Fadentrenners 4b, bei dem die Kopplungselemente 9 durch Kugelkalotten 16 gebildet sind, welche sich bei der Montage der ersten Klemmeinheit 2 in den Kontaktabschnitt 8a der Innenhülse 3a einpressen und so eine verdrehsichere Verbindung über den verdrehsicher auf dem Spindeloberteil angeordneten Fadentrenner 4b gewährleisten.

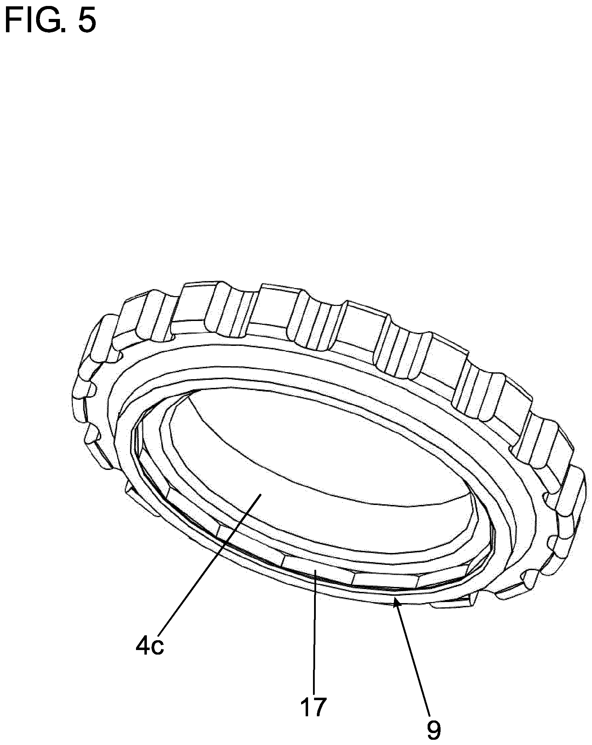

Figur 5 zeigt ein weiteres Ausführungsbeispiel eines Fadentrenners 4c, bei dem die Eingriffselemente 9 zur verdrehsicheren Verbindung mit der Innenhülse 3a durch mehrere in Umfangsrichtung hintereinanderliegend angeordnete Stege 17 gebildet sind, welche eine polygonal ausgeformte Kontaktfläche bilden, welche mit dem Kontaktabschnitt 8a der Innenhülse 3a eine in Umfangsrichtung formschlüssig wirkende Verbindung herstellt.

### Bezugszeichenliste

- 1: Fadenklemmvorrichtung
- 2: erste Klemmeinheit
- 3a, 3b: Innenhülse
- 4a, 4b, 4c: Fadentrenner
- 5: zweite Klemmeinheit
- 6: Klemmelement
- 7: Klemmspalt
- 8a, 8b: Kontaktabschnitt
- 9: Eingriffselement
- 10: Kopplungselement
- 11: Längsachse
- 12: Schraubendruckfeder
- 13: Dichtungselement
- 14: Verzahnung
- 15: Zahn
- 16: Kugelkalotten
- 17: Stege

## Patentansprüche

1. Fadenklemmvorrichtung (1) für eine Spindel einer Spinn- oder Zwirnmaschine zur lösbaren Festlegung eines Fadens in einem Klemmspalt (7), mit
- einer ersten Klemmeinheit (2) mit einer koaxial zur Spindel anordbaren Innenhülse (3a, 3b) und einem in axialer Richtung an der Innenhülse (3a, 3b) festlegbaren Fadentrenner (4a, 4b, 4c), wobei die erste Klemmeinheit (2) an einem Oberteil der Spindel axial positionierend festlegbar ist, und
- einer zweiten Klemmeinheit (5) mit einem Klemmelement (6), das axial gegenüber der ersten Klemmeinheit (2) zwischen einer den Klemmspalt (7) zwischen dem Fadentrenner (4a, 4b, 4c) und dem Klemmelement (6) schließenden Klemmstellung und einer den Klemmspalt (7) freigebenden Öffnungsstellung verstellbar ist,
wobei der Fadentrenner (4a, 4b, 4c) zur axial positionierenden Festlegung der Innenhülse (3a, 3b) an dem Spindeloberteil sowie zur verdrehfesten Verbindung der Innenhülse (3a, 3b) mit dem Spindeloberteil ausgebildet ist, und
wobei der Fadentrenner (4a, 4b, 4c) und die Innenhülse (3a, 3b) verdrehfest miteinander verbindbar sind,
**dadurch gekennzeichnet, dass**
der Fadentrenner (4a, 4b, 4c) mit einem Kontaktabschnitt (8a, 8b) an der Innenhülse (3a, 3b) in Eingriff bringbare Eingriffselemente (9) aufweist, oder
ein Verbindungselement im Bereich zwischen einem Kontaktabschnitt (8a, 8b) an der Innenhülse (3a, 3b) und dem Fadentrenner (4a, 4b, 4c) angeordnet ist, das kraft- und/oder formschlüssig verdrehfest mit dem Kontaktabschnitt (8a, 8b) und dem Fadentrenner (4a, 4b, 4c) verbunden ist.

2. Fadenklemmvorrichtung (1) nach Anspruch 1, **dadurch gekennzeichnet, dass** der Fadentrenner (4a, 4b, 4c) mittels eines Sinterverfahrens aus einem metallhaltigen Material ausgebildet ist.

3. Fadenklemmvorrichtung (1) nach Anspruch 1 oder 2, **dadurch gekennzeichnet, dass** das Verbindungselement wenigstens mit einem Presssitz auf dem Spindeloberteil anordbar ist oder Eingriffselemente (9) zum Erzeugen einer Klemmwirkung mit dem Spindeloberteil mittels Materialverdrängung auf Seiten des Fadentrenners (4a, 4b, 4c) und/oder auf Seiten des Kontaktabschnitts (8a, 8b) bei der Montage der Fadenklemmvorrichtung (1) aufweist, wobei der Fadentrenner (4a, 4b, 4c) oder der Kontaktabschnitt (8a, 8b) aus einem durch Krafteinwirkung verformbaren Material ausgebildet ist.

4. Fadenklemmvorrichtung (1) nach Anspruch 1 oder 2, **dadurch gekennzeichnet, dass** das Verbindungselement wenigstens mit einem Presssitz auf dem Spindeloberteil anordbar ist oder der Fadentrenner (4a, 4b, 4c) oder der Kontaktabschnitt (8a, 8b) Eingriffselemente (9) zum Erzeugen einer Klemmwirkung mit dem Spindeloberteil mittels Materialverdrängung auf Seiten des Verbindungselementes bei der Montage der Fadenklemmvorrichtung (1) aufweist, wobei das Verbindungselement aus einem durch Krafteinwirkung verformbaren Material zur Klemmung der ersten Klemmeinheit (2) an dem Spindeloberteil ausgebildet ist.

5. Fadenklemmvorrichtung (1) nach einem der Ansprüche 1 bis 3, **dadurch gekennzeichnet, dass** die Eingriffselemente (9) in den aus einem verformbaren Material ausgebildeten Kontaktabschnitt (8a) zum Klemmen der Innenhülse (3a) an dem Spindeloberteil einpressbar sind.

6. Fadenklemmvorrichtung (1) nach einem oder mehreren der vorherigen Ansprüche, **dadurch gekennzeichnet, dass** der Kontaktabschnitt (8a, 8b) mit den Eingriffselementen (9) in Wirkverbindung bringbare Kopplungselemente (10) aufweist.

7. Fadenklemmvorrichtung (1) nach 6, **dadurch gekennzeichnet, dass** die Eingriffselemente (9) und insbesondere die Kopplungselemente (10) als Verzahnung (14) ausgebildet sind.

8. Fadenklemmvorrichtung (1) nach einem oder mehreren der vorherigen Ansprüche, **dadurch gekennzeichnet, dass** das Verbindungselement als Haftring oder Zahnring ausgebildet ist.

## Claims

1. Thread clamping device (1) for a spindle of a spinning or twisting machine for releasably fixing a thread in a clamping gap (7), comprising
- a first clamping unit (2) having an inner sleeve (3a, 3b) which can be arranged coaxially to the spindle, and a thread separator (4a, 4b, 4c) which can be fixed to the inner sleeve (3a, 3b) in the axial direction, the first clamping unit (2) being fixable in an axially positioned manner to an upper part of the spindle, and
- a second clamping unit (5) having a clamping element (6) which is axially adjustable relative to the first clamping unit (2) between a clamping position closing the clamping gap (7) between the thread separator (4a, 4b, 4c) and the clamping element (6) and an opening position exposing the clamping gap (7),
the thread separator (4a, 4b, 4c) being designed for axially positioning and fixing the inner sleeve (3a, 3b) to the spindle upper part and for connecting the inner sleeve (3a, 3b) to the spindle upper part for conjoint twisting, and
the thread separator (4a, 4b, 4c) and the inner sleeve (3a, 3b) being connectable to one another for conjoint twisting,
**characterized in that**
the thread separator (4a, 4b, 4c) has engagement elements (9) which can be brought into engagement with a contact portion (8a, 8b) on the inner sleeve (3a, 3b), or
a connecting element is arranged in the region between a contact portion (8a, 8b) on the inner sleeve (3a, 3b) and the thread separator (4a, 4b, 4c), which connecting element is force-fittingly and/or form-fittingly connected to the contact portion (8a, 8b) and the thread separator (4a, 4b, 4c) for conjoint twisting.

2. Thread clamping device (1) according to claim 1, **characterized in that** the thread separator (4a, 4b, 4c) is made of a metal-containing material by means of a sintering process.

3. Thread clamping device (1) according to claim 1 or 2, **characterized in that** the connecting element can be arranged at least with a press fit on the spindle upper part or has engagement elements (9) for producing a clamping effect with the spindle upper part by means of material displacement on the side of the thread separator (4a, 4b, 4c) and/or on the side of the contact portion (8a, 8b) during assembly of the thread clamping device (1), the thread separator (4a, 4b, 4c) or the contact portion (8a, 8b) being made of a material deformable by the application of force.

4. Thread clamping device (1) according to claim 1 or 2, **characterized in that** the connecting element can be arranged at least with a press fit on the spindle upper part or the thread separator (4a, 4b, 4c) or the contact portion (8a, 8b) has engagement elements (9) for producing a clamping effect with the spindle upper part by means of material displacement on the side of the connecting element during assembly of the thread clamping device (1), the connecting element being made of a material deformable by the application of force for clamping the first clamping unit (2) to the spindle upper part.

5. Thread clamping device (1) according to any of claims 1 to 3, **characterized in that** the engagement elements (9) can be pressed into the contact portion (8a) made of a deformable material for clamping the inner sleeve (3a) to the spindle upper part.

6. Thread clamping device (1) according to one or more of the preceding claims, **characterized in that** the contact portion (8a, 8b) has coupling elements (10) which can be brought into operative connection with the engagement elements (9).

7. Thread clamping device (1) according to 6, **characterized in that** the engagement elements (9) and in particular the coupling elements (10) are designed as teeth (14).

8. Thread clamping device (1) according to one or more of the preceding claims, **characterized in that** the connecting element is designed as an adhesive ring or toothed ring.

## Revendications

1. Dispositif de serrage de fil (1) pour une broche d'un métier à filer ou à retordre pour la fixation de manière amovible d'un fil dans une fente de serrage (7), comportant
- une première unité de serrage (2) comportant une douille intérieure (3a, 3b) pouvant être disposée de manière coaxiale par rapport à la broche et un séparateur de fil (4a, 4b, 4c) pouvant être fixé dans la direction axiale sur la douille intérieure (3a, 3b), dans lequel la première unité de serrage (2) peut être fixée en position axialement sur une partie supérieure de la broche, et
- une seconde unité de serrage (5) comportant un élément de serrage (6) qui peut être réglé axialement par rapport à la première unité de serrage (2) entre une position de serrage fermant la fente de serrage (7) entre le séparateur de fil (4a, 4b, 4c) et l'élément de serrage (6) et une position d'ouverture libérant la fente de serrage (7),
dans lequel le séparateur de fil (4a, 4b, 4c) est réalisé pour la fixation en position axiale de la douille intérieure (3a, 3b) sur la partie supérieure de broche ainsi que pour la liaison de manière à résister à la torsion de la douille intérieure (3a, 3b) avec la partie supérieure de broche, et
dans lequel le séparateur de fil (4a, 4b, 4c) et la douille intérieure (3a, 3b) peuvent être reliés l'un à l'autre de manière à résister à la torsion,
**caractérisé en ce que**
le séparateur de fil (4a, 4b, 4c) présente des éléments de mise en prise (9) pouvant être mis en prise avec une section de contact (8a, 8b) sur la douille intérieure (3a, 3b), ou
un élément de liaison est disposé dans la zone entre une section de contact (8a, 8b) sur la douille intérieure (3a, 3b) et le séparateur de fil (4a, 4b, 4c), lequel élément de liaison est relié à force et/ou par complémentarité de forme à la section de contact (8a, 8b) et au séparateur de fil (4a, 4b, 4c) de manière à résister à la torsion.

2. Dispositif de serrage de fil (1) selon la revendication 1, **caractérisé en ce que** le séparateur de fil (4a, 4b, 4c) est réalisé à partir d'un matériau contenant du métal au moyen d'un procédé de frittage.

3. Dispositif de serrage de fil (1) selon la revendication 1 ou 2, **caractérisé en ce que** l'élément de liaison peut être disposé au moins avec un ajustement serré sur la partie supérieure de broche ou présente des éléments de mise en prise (9) permettant de produire un effet de serrage avec la partie supérieure de broche au moyen d'un refoulement de matériau sur des côtés du séparateur de fil (4a, 4b, 4c) et/ou sur des côtés de la section de contact (8a, 8b) lors du montage du dispositif de serrage de fil (1), dans lequel le séparateur de fil (4a, 4b, 4c) ou la section de contact (8a, 8b) est réalisé à partir d'un matériau déformable sous l'action d'une force.

4. Dispositif de serrage de fil (1) selon la revendication 1 ou 2, **caractérisé en ce que** l'élément de liaison peut être disposé au moins avec un ajustement serré sur la partie supérieure de broche ou le séparateur de fil (4a, 4b, 4c) ou la section de contact (8a, 8b) présente des éléments de mise en prise (9) permettant de produire un effet de serrage avec la partie supérieure de broche au moyen d'un refoulement de matériau sur des côtés de l'élément de liaison lors du montage du dispositif de serrage de fil (1), dans lequel l'élément de liaison est réalisé à partir d'un matériau déformable par l'action d'une force pour le serrage de la première unité de serrage (2) sur la partie supérieure de broche.

5. Dispositif de serrage de fil (1) selon l'une des revendications 1 à 3, **caractérisé en ce que** les éléments de mise en prise (9) peuvent être enfoncés dans la section de contact (8a) réalisée à partir d'un matériau déformable pour le serrage de la douille intérieure (3a) sur la partie supérieure de broche.

6. Dispositif de serrage de fil (1) selon une ou plusieurs des revendications précédentes, **caractérisé en ce que** la section de contact (8a, 8b) présente des éléments d'accouplement (10) pouvant être amenés en liaison active avec les éléments de mise en prise (9).

7. Dispositif de serrage de fil (1) selon 6, **caractérisé en ce que** les éléments de mise en prise (9) et en particulier les éléments d'accouplement (10) sont réalisés sous forme de denture (14).

8. Dispositif de serrage de fil (1) selon une ou plusieurs des revendications précédentes, **caractérisé en ce que** l'élément de liaison est réalisé sous la forme d'une bague d'adhérence ou d'une bague dentée.
